# EUROPEAN PATENT APPLICATION

(11) **EP 4 811 168 A1**
(43) Date of publication of application: **23.09.2026**
(21) Application number: 24917281.8
(22) Date of filing: 15.11.2024
(51) Int. Cl.: G06F 16/34, G06F 16/332, G06F 16/338, G06F 40/106, G06F 40/151, G06F 40/131, G06F 3/0482, G06F 3/04817, G06N 3/04, G06N 3/08

(54) **ELECTRONIC DEVICE FOR SUMMARIZING TEXT CONTENT ACCORDING TO FORMAT AND OPERATION METHOD THEREFOR**

(30) Priority: 12.01.2024 KR 20240005635; 07.02.2024 KR 20240018812
(71) Applicant: Samsung Electronics Co., Ltd., Suwon-si, Gyeonggi-do 16677 (KR)
(72) Inventor: KIM, Junho, Suwon-si Gyeonggi-do 16677 (KR); KWAK, Taewon, Suwon-si Gyeonggi-do 16677 (KR); LIM, Yeunwook, Suwon-si Gyeonggi-do 16677 (KR); CHANG, Hyeongseok, Suwon-si Gyeonggi-do 16677 (KR); HAN, Yonggil, Suwon-si Gyeonggi-do 16677 (KR)
(74) Representative: Nederlandsch Octrooibureau
(86) International application number: PCT/KR2024/018017
(87) International publication number: WO 2025/150684

(57) **Abstract**

Disclosed are an electronic device for summarizing text content according to a format and an operation method therefor. An electronic device according to an embodiment of the present disclosure may comprise a memory including instructions. The electronic device may comprise a processor for executing the instructions. The instructions, when executed by the processor, may cause the electronic device to generate a prompt for requesting summarization of text content in a predefined format, in response to reception of a summarization command to summarize the text content in the predefined format. The instructions, when executed by the processor, may cause the electronic device to transmit the prompt to a server that performs summarization for the prompt. The instructions, when executed by the processor, may cause the electronic device to receive, from the server, summary content of the text content generated on the basis of the prompt, in response to transmission of the prompt to the server.

## Description

### TECHNICAL FIELD

An electronic device for summarizing text content according to a format and an operating method thereof are disclosed.

### BACKGROUND ART

Recently, the field of generating summary data for various types of content (e.g., text, video, and the like) using an artificial intelligence (AI) model is developing rapidly. This field is primarily based on natural language processing and machine learning technologies. Using an AI model, an electronic device may quickly and concisely compress summary data for various types of content into only the core content. Attempts underway to provide diverse user experiences by utilizing the generation of summary data using such an AI model in various fields.

The above description is information the inventor(s) acquired during the course of conceiving the present disclosure, or already possessed at the time, and is not necessarily art publicly known before the present application is filed.

### DISCLOSURE OF THE INVENTION

### TECHNICAL SOLUTIONS

An electronic device according to an embodiment of the present disclosure includes memory storing instructions. The electronic device includes a processor configured to execute the instructions. The instructions, when executed by the processor, cause the electronic device to display menus related to predefined formats. The instructions, when executed by the processor, cause the electronic device to generate a prompt requesting the text content to be summarized in a target format, based on a selection of one of the menus. The instructions, when executed by the processor, cause the electronic device to transmit the prompt to a server configured to perform a summary on the text content. The instructions, when executed by the processor, cause the electronic device to receive, in response to transmitting the prompt to the server, from the server, summary content corresponding to the target format of the text content generated based on the prompt.

An electronic device according to an embodiment of the present disclosure includes memory storing instructions. The electronic device includes a processor configured to execute the instructions. The instructions, when executed by the processor, cause the electronic device to, in response to receiving a summary command to summarize text content in a predefined format, divide the text content into one or more parts and sequentially generate a prompt for each of the one or more divided parts. The instructions, when executed by the processor, cause the electronic device to sequentially transmit the sequentially generated prompt to a server configured to perform a summary on the text content. The instructions, when executed by the processor, cause the electronic device to receive, in response to sequentially transmitting the sequentially generated prompt to the server, from the server, summary content of the text content generated based on a prompt for the last part among the one or more divided parts.

An operating method of an electronic device according to an embodiment of the present disclosure includes displaying menus related to predefined formats. The operating method of the electronic device includes generating a prompt requesting text content to be summarized in a target format, based on a selection of one of the menus. The operating method of the electronic device includes transmitting the prompt to a server configured to perform a summary on the text content. The operating method of the electronic device includes receiving, in response to transmitting the prompt to the server, from the server, summary content corresponding to the target format of the text content generated based on the prompt.

An operating method of an electronic device according to an embodiment of the present disclosure includes, in response to receiving a summary command to summarize text content in a predefined format, dividing the text content into one or more parts and sequentially generating a prompt for each of the one or more divided parts. The operating method of the electronic device includes sequentially transmitting the sequentially generated prompt to a server configured to perform a summary on the text content. The operating method of the electronic device includes receiving, in response to sequentially transmitting the sequentially generated prompt to the server, from the server, summary content of the text content generated based on a prompt for the last part among the one or more divided parts.

A non-transitory computer-readable storage medium according to an embodiment of the present disclosure includes one or more computer programs including instructions for executing the operations described above.

### BRIEF DESCRIPTION OF DRAWINGS

FIG. 1 is a block diagram illustrating an electronic device in a network environment, according to various embodiments.
FIG. 2 is a flowchart illustrating an operating method of an electronic device, according to an embodiment of the present disclosure.
FIG. 3 is a diagram illustrating the reception of a summary command of an electronic device, according to an embodiment of the present disclosure.
FIG. 4 is a diagram illustrating predefined formats according to an embodiment of the present disclosure.
FIG. 5 is a diagram illustrating a prompt according to an embodiment of the present disclosure.
FIG. 6 is a diagram illustrating a result of receiving summary content, according to an embodiment of the present disclosure.
FIGS. 7 and 8 are diagrams illustrating a summary of large-capacity text content, according to an embodiment of the present disclosure.
FIG. 9 is a diagram illustrating an electronic device that displays summary content in an autoformat, according to an embodiment of the present disclosure.
FIG. 10 is a diagram illustrating the generation of a plurality of pieces of summary content to which a plurality of attributes is applied, according to an embodiment of the present disclosure.
FIG. 11 is a flowchart illustrating an operating method of an electronic device, according to an embodiment of the present disclosure.

### MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

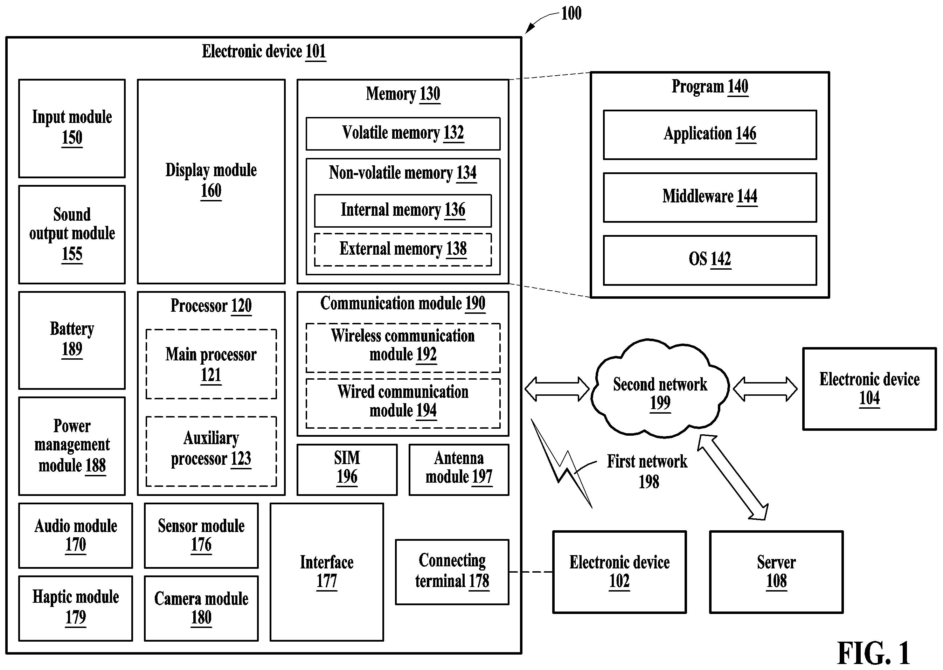

FIG. 1 is a block diagram illustrating an electronic device 101 in a network environment 100, according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or an external electronic device (e.g., the electronic device 102) (e.g., a speaker or headphone) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a complier or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

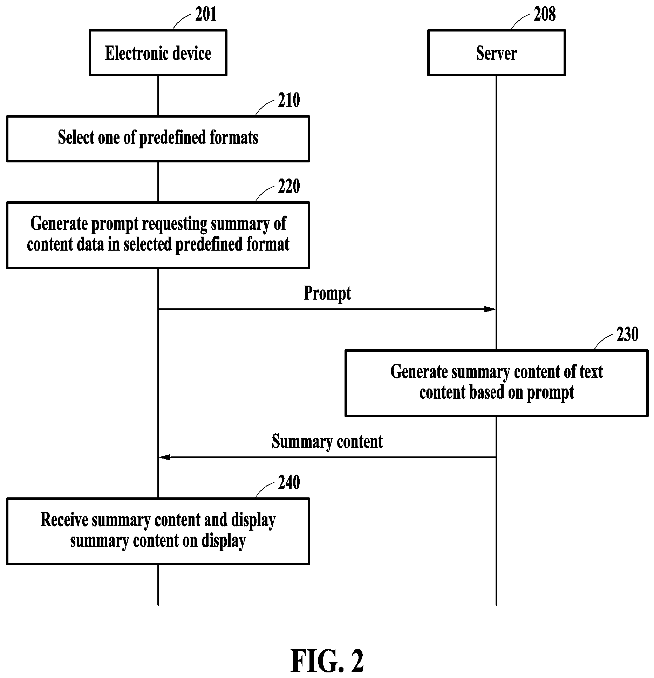

FIG. 2 is a flowchart illustrating an operating method of an electronic device, according to an embodiment of the present disclosure.

An electronic device 201 of FIG. 2 (e.g., the electronic device 101 of FIG. 1) may display text content. The electronic device 201 may provide a user with the text content using various applications (e.g., a note application and the like). For example, for providing the text content using various applications, the electronic device 201 may include various computing devices, such as a mobile phone, a smartphone, a tablet personal computer (PC), an e-book device, a laptop, a PC, a desktop, a workstation, or a server, various wearable devices, such as a smart watch, smart eyeglasses, or a head-mounted display (HMD), various home appliances, such as a smart television (TV) or a smart refrigerator, and other devices, such as a smart vehicle, a smart kiosk, an Internet of Things (IoT) device, or a robot.

The text content provided by the electronic device 201 may vary, such as content created and added directly by the user or content copied or downloaded from a website. According to an embodiment, the text content may be converted from audio content. For example, the electronic device 201 may convert audio content generated through a recording function into text content and provide the text content to the user.

The electronic device 201 may include predefined formats to summarize the text content. For example, the electronic device 201 may include the predefined formats, such as a general format, a meeting format, and a schedule format. The predefined formats may be changed or added. For example, the electronic device 201 may provide the user with editing for the predefined formats. For example, the electronic device 201 may provide a new predefined format when generating summary data for the text content by receiving a new format from the user or receiving a new format through a server (e.g., the server 108 of FIG. 1).

Hereinafter, a method in which an electronic device summarizes and provides text content in a predefined format is described.

Hereinafter, operations may be performed sequentially but not necessarily. For example, the order of the operations may be changed and at least two of the operations may be performed in parallel.

In operation 210, the electronic device 201 may select one of the predefined formats based on a user input. That is, the electronic device 201 may select a target format through the user input.

The electronic device 201 may receive the user input requesting a format summary or a content summary for the text content. When the user input requesting a format summary is received, the electronic device 201 may display predefined formats that may be provided to the user. The electronic device 201 may receive, from the user, a selection of one predefined format (i.e., a target format) among the predefined formats displayed.

According to an embodiment, the electronic device 201 may provide the predefined formats for the text content to the user. The type of text content may include to-dos, meetings, lecture notes, information, shopping lists, schedules, travel, diaries, fitness, account books, cooking recipes, newspapers, and the like. For example, the electronic device 201 may display, on a display, menus for selecting the predefined formats.

According to an embodiment, the electronic device 201 may recommend predefined formats suitable for the text content to the user and may receive a selection of one predefined format (i.e., a target format) among the recommended predefined formats. For example, when the text content is about a travel plan, the electronic device 201 may recommend predefined formats (e.g., schedule formats) suitable for the travel plan. Specifically, the electronic device 201 may determine the type of text content. The type of text content may include to-dos, meetings, lecture notes, information, shopping lists, schedules, travel, diaries, fitness, account books, cooking recipes, newspapers, and the like. The electronic device 201 may recommend predefined formats according to the determined type of text content. For example, when the text content is determined to be a meeting, the electronic device may recommend a meeting minutes format.

In operation 220, the electronic device 201 may generate a prompt requesting a summary of content data in a selected predefined format.

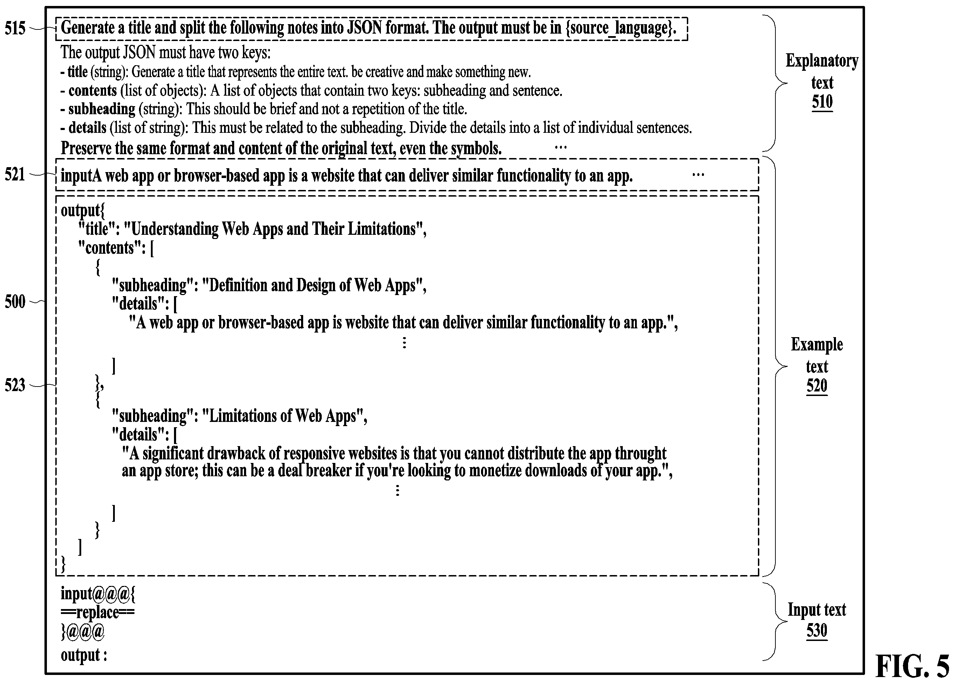

The prompt may request a server 208 to summarize the text content in a selected predefined format. A description of the prompt is provided below with reference to FIG. 5.

According to an embodiment, the electronic device 201 may generate a prompt requesting a summary of the text content in a selected predefined format through a generative artificial intelligence (AI) manager of a generative AI module.

The electronic device may transmit the prompt to the server 208 (e.g., the server 108 of FIG. 1). The electronic device 201 and the server 208 may communicate with each other via a network (e.g., the second network 199 of FIG. 1).

In operation 230, the server 208 may generate summary content of the text content based on the prompt.

The server 208 may generate the summary content of the text content based on the prompt, in response to receiving the prompt from the electronic device 201. The server 208 may generate the summary content by summarizing and aligning the text content in a structure corresponding to the selected predefined format.

According to an embodiment, the server 208 may store an AI model. The server 208 may output the summary content of the text content by inputting the prompt to the AI model. According to an embodiment, the AI model may be a generative AI model based on a large language model (LLM). According to an embodiment, the AI model may be trained to generate the summary content of the text content according to a format when receiving the prompt for the text content. The description of the AI model described above is only an example, and the present disclosure is not limited thereto.

According to an embodiment, the electronic device 201 may store the AI model. The electronic device 201 may independently input the prompt to the AI model without having to transmit the prompt to the server 208. The electronic device 201 may output the summary content of the text content by inputting the prompt to the AI model. The AI model is described above, so a description thereof is omitted.

In operation 240, the electronic device 201 may receive the summary content from the server 208 and display the summary content on a display (e.g., the display module 160 of FIG. 1).

The summary content may be content in which the text content is summarized according to the predefined format (i.e., a target format) selected from operation 210.

Hereinafter, a summary command to summarize the text content in a predefined format is described.

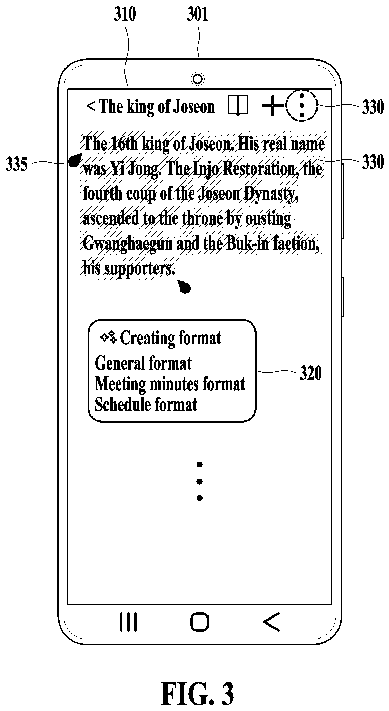

FIG. 3 is a diagram illustrating the reception of a summary command of an electronic device, according to an embodiment of the present disclosure.

FIG. 3 illustrates an electronic device 301 (e.g., the electronic device 101 of FIG. 1 and the electronic device 201 of FIG. 2) displaying text content 330 on a display module 310 (e.g., the display module 160 of FIG. 1). The electronic device 301 may provide an interface capable of summarizing the text content and generating summary content according to a predefined format.

The electronic device 301 may display the text content 330 through various applications. For example, the electronic device may display the text content 330 through a note application. For example, the electronic device may display the text content 330 through a web browser application. However, for ease of description, the reception of a summary command for the text content of the electronic device 301 when displaying the text content 330 through a note application is described below.

According to an embodiment, the electronic device 301 may display various menus on the display module 310 according to a user input 330 (e.g., a selection of a settings button). The electronic device 310 may receive, as an input, a format summary menu among the various menus. In response to the input of the format summary menu, the electronic device may display a pop-up window 320 that displays predefined formats. The electronic device may receive a selection of one predefined format (i.e., a target format) among the predefined formats through the pop-up window 320. That is, the electronic device may receive a summary command to summarize the text content in one of the predefined formats.

According to an embodiment, the pop-up window 320 may display all predefined formats that the electronic device 301 may provide in a menu format. For example, the electronic device 301 may display a general format menu, a meeting minutes format menu, and a schedule format menu on the pop-up window 320. Alternatively, the pop-up window 320 may display recommended predefined formats suitable for the text content being displayed on the display module 310.

According to an embodiment, the electronic device 301 may receive a summary command to generate summary content for all or a portion of the text content. For example, the electronic device 301 may receive a selection of a portion of the text content through a cursor 335 and receive a summary command to generate summary content for the selected portion of the text content.

According to an embodiment, the electronic device 301 may perform a format summary or a content summary on a selected page for the text content including a plurality of pages. For example, the electronic device 301 may perform a format summary on content based on a summary command for a currently displayed page among the plurality of pages. Additionally, the electronic device 301 may perform a format summary or a content summary on the selected text content among the entire text content. For example, the electronic device 301 may perform a format summary based on the content selected by the user input among the entire text content.

However, the reception of the summary command by the electronic device 301 described above is only an example, and the present disclosure is not limited thereto. Hereinafter, examples of the predefined formats are described.

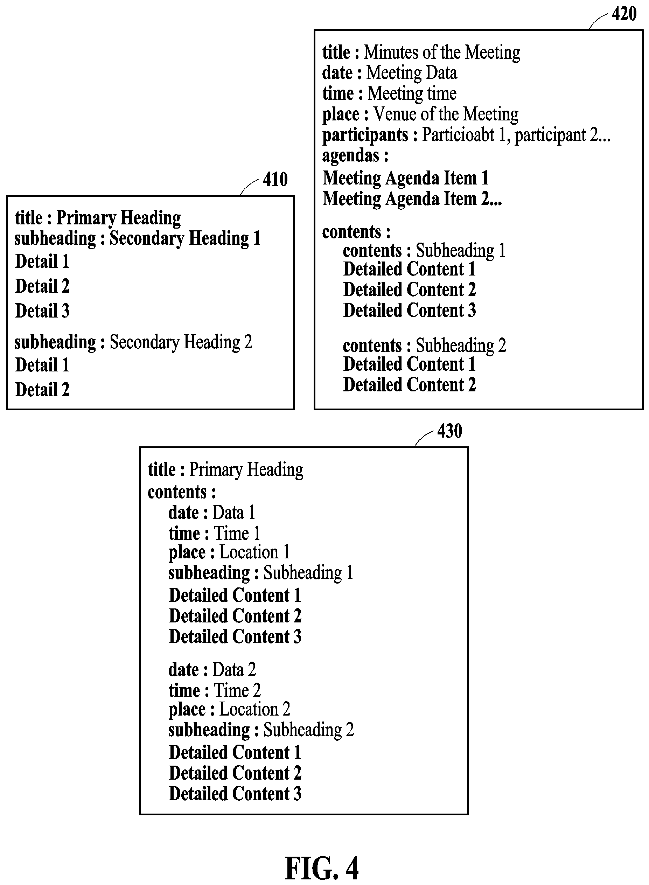

FIG. 4 is a diagram illustrating predefined formats according to an embodiment of the present disclosure.

FIG. 4 illustrates, among the predefined formats, a general format 410, a meeting minutes format 420, and a schedule format 430. Each format illustrated in FIG. 4 is only an example, and the present disclosure is not limited thereto. That is, the predefined formats may include more formats in addition to the general format 410, the meeting minutes format 420, and the schedule format 430.

Referring to the general format 410, the general format 410 may include a title for text content and include one or more subheadings as subitems for the title. The title may be a primary heading representing the text content, and the one or more subheadings may be subheadings for the primary title. Each of the one or more subheadings may include descriptions related to the subheadings. That is, each of the one or more subheadings may be displayed grouped with the descriptions related to the subheadings.

Referring to the meeting minutes format 420, the meeting minutes format 420 may include a title for text content and include a date, a time, a place, participants, agendas, and contents as subitems for the title. The title may be minutes of the meeting, the date may be the meeting date, the time may be the meeting time, the place may be the venue of the meeting, the participants may be the meeting participants, and the agendas may be the meeting agendas. The contents may further include one or more subheadings as subitems. Each of the one or more subheadings may include descriptions related to the subheadings.

Referring to the schedule format 430, the schedule format 430 may include a title and include content as a subitem for the title. The title may be a primary title representing text content. The contents may further include one or more dates, one or more times, one or more places, and subheadings as subitems. Each of the one or more subheadings may include descriptions related to the subheadings.

The predefined formats described above are only examples, and the present disclosure is not limited thereto.

An electronic device (e.g., the electronic device 101 of FIG. 1, the electronic device 201 of FIG. 2, and the electronic device 310 of FIG. 3) may generate a prompt when receiving a summary command to generate summary content for text content (e.g., the text content 330 of FIG. 3) according to one of the predefined formats. Hereinafter, a prompt requesting text content to be summarized in a predefined format is described.

FIG. 5 is a diagram illustrating a prompt according to an embodiment of the present disclosure.

FIG. 5 illustrates a prompt 500 generated in response to an electronic device (e.g., the electronic device 101 of FIG. 1, the electronic device 201 of FIG. 2, and the electronic device 301 of FIG. 3) receiving a summary command to generate summary content according to one of predefined formats. That is, the prompt 500 may be generated for a target format.

The prompt 500 may describe to a server (e.g., the server 108 of FIG. 1 and the server 208 of FIG. 2) how to summarize text content in a predefined format. That is, the prompt 500 may describe to an AI model of the server how to summarize text content in a predefined format. According to an embodiment, the electronic device may store the AI model. The electronic device may independently input the prompt 500 to the AI model without having to transmit the prompt 500 to the server. The electronic device may output the summary content of the text content by inputting the prompt 500 to the AI model.

The prompt 500 may include explanatory text 510, example text 520, and input text 530.

The electronic device may provide an explanation of the predefined formats to the AI model through the explanatory text 510. The electronic device may clearly and explicitly describe in the explanatory text 510 what summary content is to be acquired, based on the text content.

The explanatory text 510 may extract a title representing text content from the text content and include an explanation of a method of extracting the title. For example, the explanatory text 510 may include an explanation to generate a creative and new title representing the text content. The explanatory text 510 may include an explanation of what subitems should be included as subitems of the title. For example, the explanatory text 510 may include an explanation that subheadings and explanations should be included as subitems of the title. The explanatory text 510 may include an explanation of a method of extracting the subitems of the title from the text content. For example, the explanatory text 510 may include an explanation that allows subheadings to be extracted concisely without repeating the title. For example, the explanatory text 510 may include an explanation that allows an explanation to be extracted from the text content so as to be related to the subheadings.

According to an embodiment, the electronic device may further add, to the explanatory text 510, command text 515 to generate summary data in a predetermined language. Accordingly, a user may acquire the summary data in a predetermined language desired by the user. For example, even when the text content is in English, the user may acquire the summary data in Korean.

According to an embodiment, the electronic device may add, to the explanatory text 510, the command text 515 to generate summary data in a language set for the electronic device, regardless of what the language of the text content is.

The example text 520 may include an explanation of how summary content is configured and an explanation of how input data used to acquire summary content is configured. That is, the example text 520 may include an output example 523 for how the summary content generated according to a predefined format is configured. The example text 520 may include an input example 521 for explaining which input data is input to output the output example 523.

The input text 530 may include at least a portion of the text content as an input for generating the summary content. In FIG. 5, for ease of description, at least a portion of the text content included in the input text 530 is omitted.

As described above, since the explanatory text 510 includes the explanation of a predefined format and the example text 520 includes the input example 521 and the output example 523 for a predefined format, the explanatory text 510 and the example text 520 may differ depending on the predefined format. That is, a prompt of one of the predefined formats may be different from the prompts of other predefined formats.

Hereinafter, the summary content generated based on the prompt 500 is described.

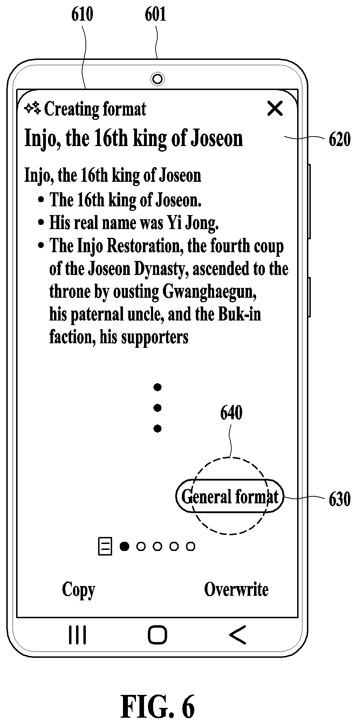

FIG. 6 is a diagram illustrating a result of receiving summary content, according to an embodiment of the present disclosure.

FIG. 6 illustrates pieces of summary content generated based on a prompt (e.g., the prompt 500 of FIG. 5).

An electronic device 601 (e.g., the electronic device 101 of FIG. 1, the electronic device 201 of FIG. 2, and the electronic device 301 of FIG. 3) may display summary content 620 generated by a server (e.g., the server 108 of FIG. 1 and the server 108 of FIG. 2) or the electronic device 601 on a display module 610 (e.g., the display module 160 of FIG. 1 and the display module 310 of FIG. 3).

The electronic device 601 may display, in the form of a button 630, a format in which summary content 610 is generated, together with the display of the summary content 610. The summary content 620 of FIG. 6 may be content generated according to a general format. That is, the summary content 620 of FIG. 6 may be content generated when a general format is selected as a target format.

The electronic device may receive, from a user, a user input 640 (e.g., a selection of the button 630) to change the format. In response to the reception of the user input 640, the electronic device may display other predefined formats on the display module 610. For example, in response to the reception of the user input, the electronic device may display other predefined formats as a pop-up window (e.g., the pop-up window 320 of FIG. 3).

When receiving a command to summarize text content in other predefined formats, the electronic device may display, on the display module 610, summary content summarized in other predefined formats according to the method described above.

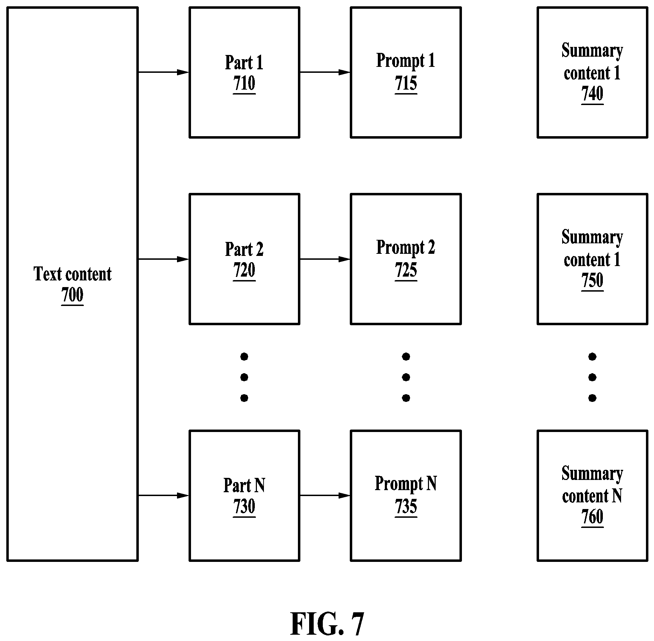

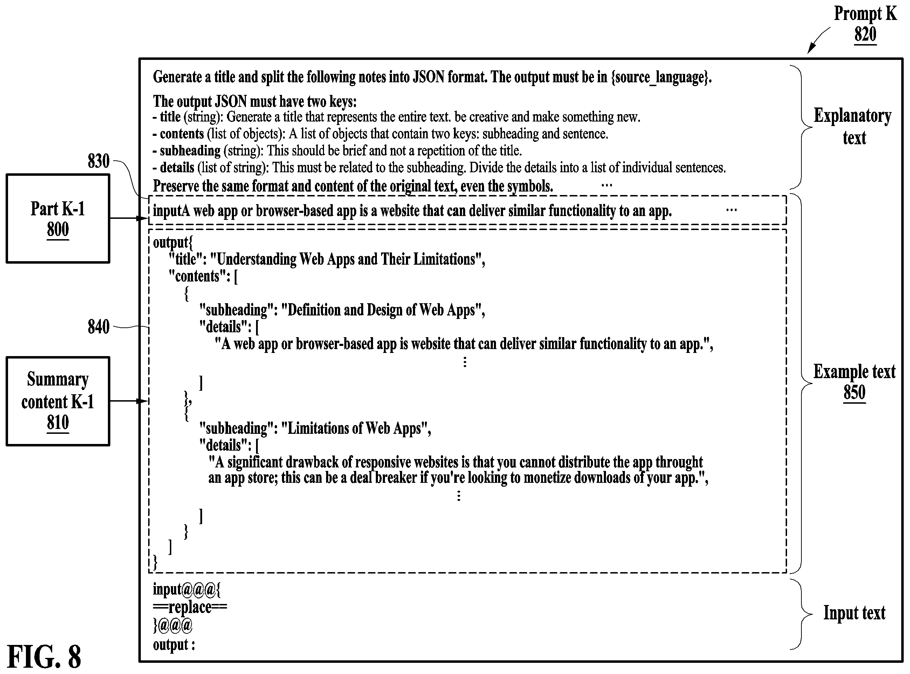

FIGS. 7 and 8 are diagrams illustrating a summary of large-capacity text content, according to an embodiment of the present disclosure.

The quality of summary content (e.g., the summary content 620 of FIG. 6) may vary depending on the maximum token size supported by an AI model, the memory performance of an electronic device (e.g., the electronic device 101 of FIG. 1, the electronic device 201 of FIG. 2, the electronic device 301 of FIG. 3, and the electronic device 601 of FIG. 6), and/or the time required for a server (e.g., the server 108 of FIG. 1 and the server 208 of FIG. 2) to generate the summary content. Accordingly, to acquire more improved summary content, the size of text content 700 (e.g., the text content 330 of FIG. 3) may need to be limited.

According to an embodiment, the size of the text content 700 may be greater than a threshold size that the AI model may process at a time. For example, the AI model may process text content ranging from a minimum of 200 characters to 2,000 characters at a time, and the text content 700 may exceed 2,000 characters. In this case, the electronic device may divide the text content 700 into one or more parts (e.g., part 1 710 to part N 730) and sequentially generates a prompt for each of the one or more parts.

Hereinafter, a method is described in which the electronic device divides the text content into one or more parts and sequentially generate the prompt.

When the size of the text content 700 is greater than the threshold size that the AI model may process at a time, the electronic device may divide the text content 700 into one or more parts (e.g., the part 1 710 to the part N 730). The electronic device may divide the text content 700 into threshold-size units. For example, when the size of the text content 700 is 10,000 characters and the threshold size is 2,000 characters, the electronic device may divide the text content 700 into 5 parts in units of 2,000 characters. That is, N may be 5 (i.e., N = 5).

The electronic device may sequentially generate the prompt for each of the one or more divided parts. The electronic device may sequentially generate the prompt for each of the one or more parts and may generate a prompt for a current part when summary content for a previous part is received from the server. For example, when summary content 1 740 for the part 1 710 is received from the server, the electronic device may generate prompt 2 725 for part 2 720. According to an embodiment, the electronic device may sequentially generate the prompt for each of the one or more parts and may generate the prompt for the current part when the summary content for the previous part is generated by the electronic device. For example, when the summary content 1 740 for the part 1 710 is generated, the electronic device may generate the prompt 2 725 for the part 2 720.

The electronic device may generate the prompt for the current part based on a previous part of the current part and the summary content generated based on the previous part. For example, the electronic device may generate the prompt 2 725 for the part 2 720 based on the part 1 710 and the summary content 1 740 generated based on the part 1 710. The method of generating the prompt is further described with reference to FIG. 8.

Summary content (i.e., summary content N 760) generated based on a prompt (i.e., prompt N 735) generated for the last part (i.e., the part N 730) may be content for text content 7000, rather than summary content for the last part. To this end, when generating prompts for the remaining parts among the one or more parts, except for the first part, the electronic device may add command text to generate summary content by also including the content of the summary content generated based on the prompt for the previous part.

Accordingly, among the summary content 1 740 to the summary content N 760, which are sequentially generated, summary content N 740 may be summary data for the text content 700.

Hereinafter, a method of generating a prompt for large-capacity text content is described.

FIG. 8 illustrates a prompt K 820 for a K-th part K (i.e., a current part) when text content (e.g., the text content 330 of FIG. 3 and the text content 700 of FIG. 7) is divided into one or more parts. K may be a natural number greater than or equal to 2.

An electronic device (e.g., the electronic device 101 of FIG. 1, the electronic device 201 of FIG. 2, the electronic device 301 of FIG. 3, and the electronic device 601 of FIG. 6) may generate the prompt K 820 based on part K-1 800 that is a previous part and summary content K-1 810 generated for the part K-1 800.

The electronic device may generate example text 850 (e.g., the example text 520 of FIG. 5) to include at least a portion of the part K-1 800 that is a previous part as an input example 830 (e.g., the input example 521 of FIG. 5). The electronic device may generate the example text 850 to include the summary content K-1 810 of the part K-1 800 that is a previous part as an output example 840 (e.g., the output example 523 of FIG. 5).

Additionally, the electronic device may add, to the prompt K 820, command text to generate summary content by also including the content of the summary content K-1 810.

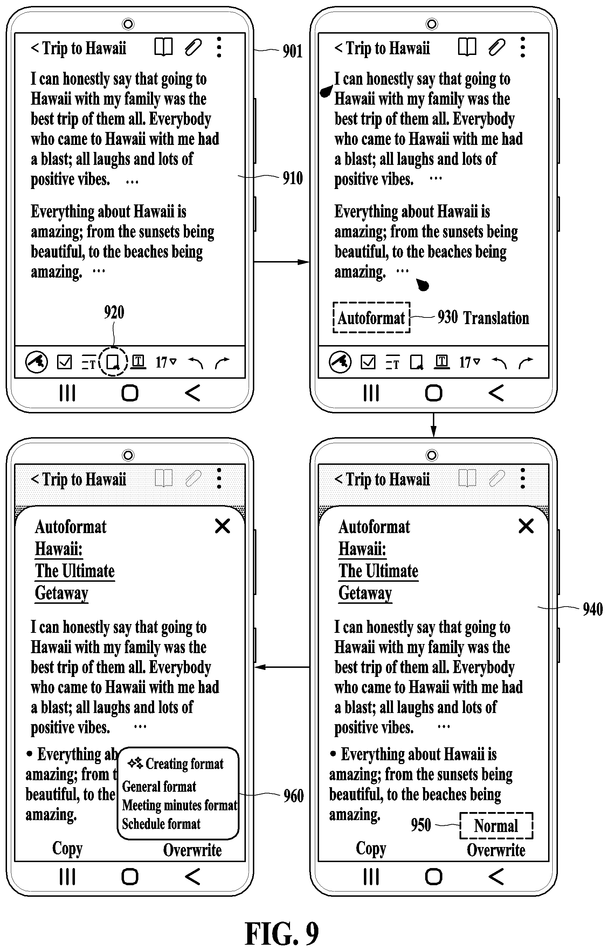

FIG. 9 is a diagram illustrating an electronic device that displays summary content in an autoformat, according to an embodiment of the present disclosure.

FIG. 9 illustrates an electronic device 901 (e.g., the electronic device 101 of FIG. 1, the electronic device 201 of FIG. 2, the electronic device 301 of FIG. 3, and the electronic device 601 of FIG. 6) that displays summary content 940 (e.g., the summary content 620 of FIG. 6) that summarizes text content 910 (e.g., the text content 330 of FIG. 3 and the text content 700 of FIG. 7) according to the autoformat.

The electronic device 901 may provide the text content 910 to a user through various applications. The electronic device 901 may provide various options for the text content 910. When a user input 920 (e.g., a selection of an option button) is received from the user, the electronic device 901 may display various options. For example, the electronic device may display, in various options, a button for summarizing the text content 910 in an autoformat, a translation button, and the like. The electronic device 901 may receive a user input 930 selecting an autoformat button.

According to an embodiment, the autoformat may be, among predefined formats, a format recommended for the text content 910. The method of recommending the predefined format for the text content 910 is described above with reference to FIG. 2, so a description thereof is omitted.

According to an embodiment, the autoformat may be a new format generated for the text content 910. That is, the autoformat may be a format newly generated for the text content 910, rather than a predefined format. Here, the electronic device 901 or a server (e.g., the server 108 of FIG. 1 and the server 208 of FIG. 2) may analyze the text content 910 and generate a format suitable for summarizing the text content 910.

The electronic device 901 may generate a prompt (e.g., the prompt 500 of FIG. 5) that causes an AI model of the server (e.g., the server 108 of FIG. 1 and the server 208 of FIG. 2) to generate the summary content 940 according to the autoformat. The electronic device may transmit the prompt to the server, receive the summary content 940 from the server in response, and display the summary content 940 on a display module (e.g., the display module 160 of FIG. 1, the display module 310 of FIG. 3, and the display module 610 of FIG. 6).

The electronic device may display a format that is a basis for generating summary content together with the summary content 940. For example, the electronic device may display a "general format" together when the summary content 940 is generated based on the general format that is a recommended format. For example, the electronic device may display an "autoformat" together when the summary content 940 is generated based on the autoformat.

The electronic device 901 may receive a user input 950 to change the format. In response to the reception of the user input 950, the electronic device may display other predefined formats on the display module. For example, in response to the reception of the user input, the electronic device may display other predefined formats as a pop-up window (e.g., the pop-up window 320 of FIG. 3).

When a command to summarize text content in other predefined formats is received, the electronic device 901 may display, on the display module, summary content summarized in other predefined formats according to the method described above.

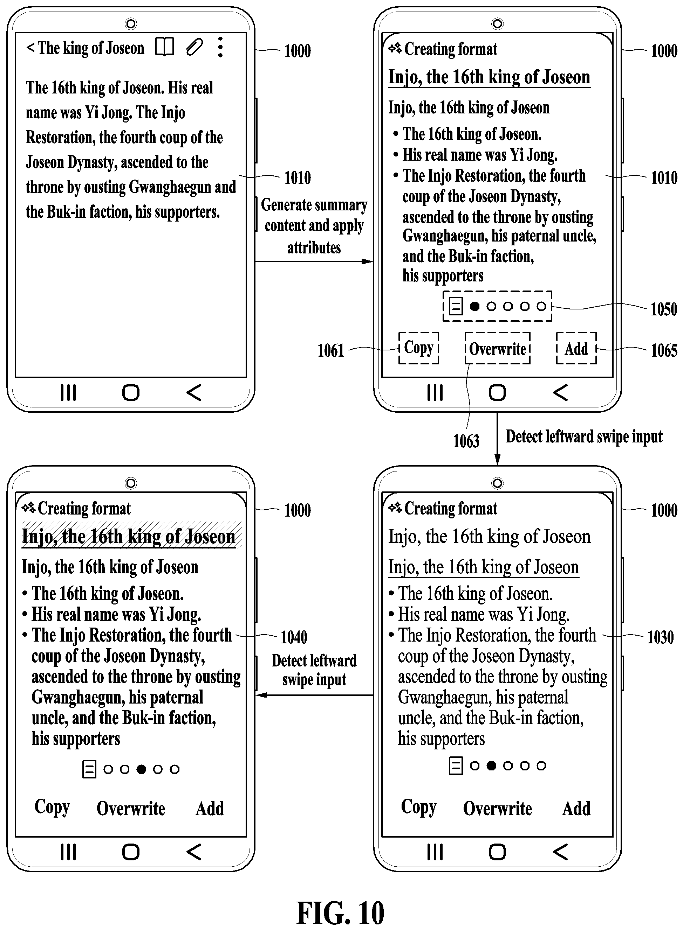

FIG. 10 is a diagram illustrating the generation of a plurality of pieces of summary content to which a plurality of attributes is applied, according to an embodiment of the present disclosure.

FIG. 10 illustrates an electronic device 1000 (e.g., the electronic device 101 of FIG. 1, the electronic device 201 of FIG. 2, the electronic device 301 of FIG. 3, the electronic device 601 of FIG. 6, and the electronic device 901) displaying text content 1010 (e.g., the text content 330 of FIG. 3, the text content 700 of FIG. 7, and the text content 910 of FIG. 9).

The electronic device 1000 may receive a summary command to summarize the text content 1010 in one predefined format (i.e., a target format) among predefined formats for the text content 1010. In response to receiving the summary command, the electronic device may receive summary content for the text content 1010 from a server (e.g., the server 108 of FIG. 1 and the server 208 of FIG. 2) or generate summary content.

The electronic device 1000 may generate, by applying a plurality of styles to the generated or received summary content, summary content to which the plurality of styles is applied. For example, the electronic device 1000 may generate five pieces of summary content to which five styles are applied.

When a style is applied to the summary content, the summary content may be changed based on predetermined attributes for the style. The predetermined attributes may include at least one of various attributes that may be applied to the summary content, such as a font size, a font type, a font color, whether to apply highlighting, and whether to apply underlining.

The plurality of styles may be different from each other. For example, referring to summary content 1020 to which a first style is applied, an underline may be applied to the title and font type A may be applied. On the other hand, referring to summary content 1030 to which a second style is applied, an underline may be applied to the subheading and font type B may be applied. On the other hand, referring to summary content 1040 to which a third style is applied, a highlight may be applied to the title and a larger font type than that of the first and second styles may be applied.

The electronic device 1000 may further include an indicator 1050 that indicates a location of summary content to which a predetermined style is applied, which is currently being displayed on a screen. Referring to the indicator 1050, a document-shaped icon located on the leftmost side may represent the original document. The circular icons disposed on the right side of the original document may represent summary content to which a predetermined style is applied. For example, when a leftward swipe input is detected while displaying the summary content 1020 to which the first style is applied, the electronic device 1000 may display, on the screen, the summary content 1030 to which the second style is applied. In response to this, the indicator 1050 may also be changed to indicate a location of the summary content 1030 to which the second style is applied. For example, when a leftward swipe input is detected while displaying the summary content 1030 to which the second style is applied, the electronic device 1000 may display, on the screen, the summary content 1040 to which the third style is applied. In response to this, the indicator 1050 may also be changed to indicate a location of the summary content 1040 to which the third style is applied.

The electronic device 1000 may further display, on the screen, a copy button 1061, an overwrite button 1063, and an add button 1065 along with the summary content to which a predetermined style is applied. When the selection of the copy button 1061 is detected, the electronic device 1000 may copy the summary content to which a predetermined style is applied, which is currently being displayed on the screen. When the selection of the overwrite button 1063 is detected, the electronic device 1000 may replace and store the existing text content 1010 with the summary content to which a predetermined style is applied. When the selection of the add button 1065 is detected, the electronic device 1000 may provide the modification of a style or the creation of a new style for the summary content to which a predetermined style is applied.

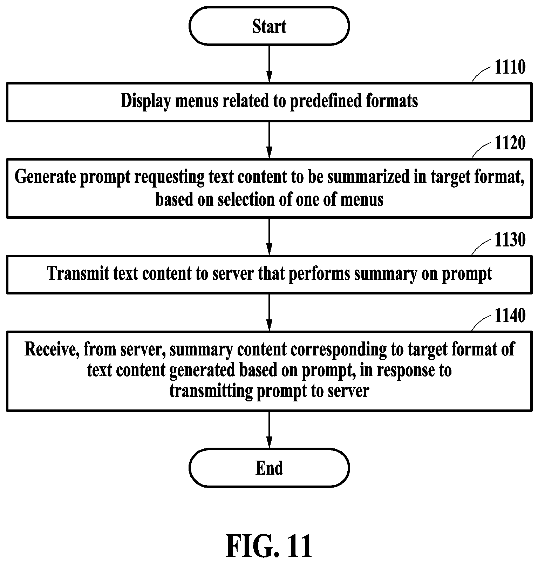

FIG. 11 is a flowchart illustrating an operating method of an electronic device, according to an embodiment of the present disclosure.

Hereinafter, operations may be performed sequentially but not necessarily. For example, the order of the operations may be changed and at least two of the operations may be performed in parallel. Operations 1110 to 1140 may be performed by at least one component (e.g., the processor 120 of FIG. 1) of an electronic device (e.g., the electronic device 101 of FIG. 1, the electronic device 201 of FIG. 2, the electronic device 301 of FIG. 3, the electronic device 601 of FIG. 6, the electronic device 901 of FIG. 9, and the electronic device 1000 of FIG. 10).

In operation 1110, the electronic device may display menus related to predefined formats.

In operation 1120, the electronic device may generate a prompt (e.g., the prompt 500 of FIG. 5) requesting text content (e.g., the text content 330 of FIG. 3, the text content 700 of FIG. 7, and the text content 910 of FIG. 9) to be summarized in a target format, based on a selection of one of the menus.

In operation 1130, the electronic device may transmit the text content to a server (e.g., the server 108 of FIG. 1 and the server 208 of FIG. 2) that performs a summary on the prompt.

In operation 1140, the electronic device may receive, from the server, summary content (e.g., the summary content 620 of FIG. 6 and the summary content 940 of FIG. 9) corresponding to the target format of the text content generated based on the prompt, in response to transmitting the prompt to the server.

Since the descriptions provided above with reference to FIGS. 1 to 10 apply to each operation illustrated in FIG. 11, a detailed description thereof is omitted.

According to an embodiment, instructions, when executed by a processor, may cause the electronic device to generate, by applying a plurality of styles to the summary content, a plurality of pieces of summary content to which the plurality of styles is applied.

According to an embodiment, the prompt may include explanatory text (e.g., the explanatory text 510 of FIG. 5) providing an explanation of the target format. The prompt may include example text (e.g., the example text 520 of FIG. 5 and the example text 850 of FIG. 8) providing an input example (e.g., the input example 521 of FIG. 5 and the input example 830 of FIG. 8) and an output example (e.g., the output example 523 of FIG. 5 and the output example 840 of FIG. 8) of the target format. The prompt may include input text (e.g., the input text 530 of FIG. 5) including at least a portion of the text content.

According to an embodiment, the generating of the prompt may include dividing the text content into one or more parts (e.g., the part 1 710 to the part N 730 of FIG. 7) when the text content exceeds a threshold size and sequentially generating the prompt for each of the one or more divided parts.

According to an embodiment, the generating of the prompt may include, when sequentially generating the prompt for each of the one or more divided parts, generating a prompt for a current part including the example text having input text of a prompt for a previous part and summary content generated based on the prompt for the previous part as an input example and an output example, respectively.

According to an embodiment, the generating of the prompt may include, when generating prompts for the remaining parts, except for the first part, among the one or more divided parts, adding command text to generate the summary content by also including the content of the summary content generated based on the prompt for the previous part.

According to an embodiment, an operating method may further include analyzing the type of text content and recommending, to a user, among a plurality of predefined formats, predefined formats related to the type of text content.

According to an embodiment, the generating of the prompt may include adding, to the prompt, command text (e.g., the command text 515) to generate the summary content in a language set for the electronic device, regardless of the language of the text content.

According to an embodiment, the prompt for the target format may include different explanatory text and different example text from those of other predefined formats.

An operating method of an electronic device according to an embodiment of the present disclosure may include, in response to receiving a summary command to summarize text content in a predefined format, dividing the text content into one or more parts and sequentially generating a prompt for each of the one or more divided parts. The operating method of the electronic device may include sequentially transmitting the sequentially generated prompt to a server configured to perform a summary on the text content. The operating method of the electronic device may include receiving, in response to sequentially transmitting the sequentially generated prompt to the server, from the server, summary content of the text content generated based on a prompt for the last part among the one or more divided parts.

A non-transitory computer-readable storage medium according to an embodiment of the present disclosure may include one or more computer programs including instructions for executing the operations described above.

An electronic device according to an embodiment of the present disclosure may include memory (e.g., the memory 130 of FIG. 1) storing instructions. The electronic device may include a processor (e.g., the processor 120 of FIG. 1) configured to execute the instructions. The instructions, when executed by the processor, may cause the electronic device to display menus related to predefined formats. The instructions, when executed by the processor, may cause the electronic device to generate a prompt requesting the text content to be summarized in a target format, based on a selection of one of the menus. The instructions, when executed by the processor, may cause the electronic device to transmit the prompt to a server configured to perform a summary on the text content. The instructions, when executed by the processor, may cause the electronic device to receive, in response to transmitting the prompt to the server, from the server, summary content corresponding to the target format of the text content generated based on the prompt.

According to an embodiment, the operating method may further include generating, by applying a plurality of styles to the summary content, a plurality of pieces of summary content to which the plurality of styles is applied.

According to an embodiment, the prompt may include explanatory text providing an explanation of the target format. The prompt may include example text providing an input example and an output example of the target format. The prompt may include input text including at least a portion of the text content.

According to an embodiment, the instructions, when executed by the processor, may cause the electronic device to divide the text content into one or more parts when the text content exceeds a threshold size. The instructions, when executed by the processor, may cause the electronic device to sequentially generate a prompt for each of the one or more divided parts.

According to an embodiment, the instructions, when executed by the processor, may cause the electronic device to, when sequentially generating the prompt for each of the one or more divided parts, generate a prompt for a current part including example text having input text of a prompt for a previous part and the summary content generated based on the prompt for the previous part as an input example and an output example, respectively.

According to an embodiment, the instructions, when executed by the processor, may cause the electronic device to, when generating the prompt for remaining parts, except for the first part, among the one or more divided parts, add command text to generate summary content by also including the content of the summary content for a previous part, which is generated based on the prompt.

According to an embodiment, the instructions, when executed by the processor, may cause the electronic device to analyze a type of text content. The instructions, when executed by the processor, may cause the electronic device to recommend to a user, among a plurality of predefined formats, predefined formats related to the type of text content.

According to an embodiment, the instructions, when executed by the processor, may cause the electronic device to add, to the prompt, command text for generating the summary content in a language set for the electronic device, regardless of the language of the text content.

According to an embodiment, the prompt for the target format may include different explanatory text and different example text from those of other predefined formats.

An electronic device according to an embodiment of the present disclosure may include memory storing instructions. The electronic device may include a processor configured to execute the instructions. The instructions, when executed by the processor, may cause the electronic device to, in response to receiving a summary command to summarize text content in a predefined format, divide the text content into one or more parts and sequentially generate a prompt for each of the one or more divided parts. The instructions, when executed by the processor, may cause the electronic device to sequentially transmit the sequentially generated prompt to a server configured to perform a summary on the text content. The instructions, when executed by the processor, may cause the electronic device to receive, in response to sequentially transmitting the sequentially generated prompt to the server, from the server, summary content of the text content generated based on a prompt for the last part among the one or more divided parts.

The embodiments of the present disclosure disclosed in the specification and the drawings are merely presented to easily describe technical contents of the embodiments of the present disclosure and help the understanding of them and are not intended to limit the embodiments. Therefore, the scope of the various embodiments of the present disclosure should be interpreted as including all changes or modified forms derived based on the technical ideas of the various embodiments of the present disclosure in addition to the embodiments disclosed herein.

## Claims

1. An electronic device (101, 201, 301, 601, 901, 1000) comprising:
memory (130) storing instructions; and
a processor (120) configured to execute the instructions,
wherein the instructions, when executed by the processor (120), cause the electronic device (101, 201, 301, 601, 901, 1000) to:
display menus related to predefined formats, generate a prompt (500) requesting the text content (330, 700, 910) to be summarized in a target format, based on a selection of one of the menus, transmit the prompt (500) to a server (108, 208) configured to perform a summary on the text content (330, 700, 910), and receive, in response to transmitting the prompt (500) to the server (108, 208), from the server (108, 208), summary content (620, 940) corresponding to the target format of the text content (330, 700, 910) generated based on the prompt (500).

2. The electronic device of claim 1, wherein the instructions, when executed by the processor (120), cause the electronic device (101, 201, 301, 601, 901, 1000) to generate, by applying a plurality of styles to the summary content (620, 940), a plurality of pieces of summary content to which the plurality of styles is applied.

3. The electronic device (101, 201, 301, 601, 901, 1000) of one of claims 1 and 2, wherein the prompt (500) comprises explanatory text (510) providing an explanation of the target format, example text (520, 850) providing an input example (521, 830) and an output example (523, 840) of the target format, and input text (530) comprising at least a portion of the text content (330, 700, 910).

4. The electronic device (101, 201, 301, 601, 901, 1000) of one of claims 1 to 3, wherein the instructions, when executed by the processor (120), cause the electronic device (101, 201, 301, 601, 901, 1000) to divide the text content (330, 700, 910) into one or more parts when the text content (330, 700, 910) exceeds a threshold size and sequentially generate a prompt (500) for each of the one or more divided parts.

5. The electronic device (101, 201, 301, 601, 901, 1000) of one of claims 1 to 4, wherein the instructions, when executed by the processor (120), cause the electronic device (101, 201, 301, 601, 901, 1000) to, when sequentially generating the prompt (500) for each of the one or more divided parts, generate a prompt (500) for a current part comprising example text (520, 850) having input text (530) of a prompt (500) for a previous part and the summary content (620, 940) generated based on the prompt (500) for the previous part as an input example (521, 830) and an output example (523, 840), respectively.

6. The electronic device (101, 201, 301, 601, 901, 1000) of one of claims 1 to 5, wherein the instructions, when executed by the processor (120), cause the electronic device (101, 201, 301, 601, 901, 1000) to, when generating the prompt (500) for remaining parts, except for a first part, among the one or more divided parts, add command text to generate summary content (620, 940) by also comprising the summary content (620, 940) for a previous part.

7. The electronic device (101, 201, 301, 601, 901, 1000) of one of claims 1 to 6, wherein the instructions, when executed by the processor (120), cause the electronic device (101, 201, 301, 601, 901, 1000) to analyze a type of the text content (330, 700, 910) and recommend to a user, among a plurality of predefined formats, predefined formats related to the type of the text content (330, 700, 910).

8. The electronic device (101, 201, 301, 601, 901, 1000) of one of claims 1 to 7, wherein the instructions, when executed by the processor (120), cause the electronic device (101, 201, 301, 601, 901, 1000) to add, to the prompt (500), command text (515) for generating the summary content (620, 940) in a language set for the electronic device (101, 201, 301, 601, 901, 1000), regardless of a language of the text content (330, 700, 910).

9. The electronic device (101, 201, 301, 601, 901, 1000) of one of claims 1 to 8, wherein the prompt (500) for the target format comprises different explanatory text (510) and different example text (520, 850) from those of other predefined formats.

10. An electronic device (101, 201, 301, 601, 901, 1000) comprising:
memory (130) storing instructions; and
a processor (120) configured to execute the instructions,
wherein the instructions, when executed by the processor (120), cause the electronic device (101, 201, 301, 601, 901, 1000) to:
in response to receiving a summary command to summarize text content (330, 700, 910) in a predefined format, divide the text content (330, 700, 910) into one or more parts and sequentially generate a prompt (500) for each of the one or more divided parts, sequentially transmit the sequentially generated prompt (500) to a server (108, 208) configured to perform a summary on the text content (330, 700, 910), and receive, in response to sequentially transmitting the sequentially generated prompt (500) to the server (108, 208), from the server (108, 208), summary content (620, 940) of the text content (330, 700, 910) generated based on a prompt (500) for a last part among the one or more divided parts.

11. An operating method of an electronic device (101, 201, 301, 601, 901, 1000), the operating method comprising:
displaying menus related to predefined formats;
generating a prompt (500) requesting text content (330, 700, 910) to be summarized in a target format, based on a selection of one of the menus; transmitting the prompt (500) to a server (108, 208) configured to perform a summary on the text content (330, 700, 910); and
receiving, in response to transmitting the prompt (500) to the server (108, 208), from the server (108, 208), summary content (620, 940) corresponding to the target format of the text content (330, 700, 910) generated based on the prompt (500).

12. The operating method of claim 11, further comprising:
generating, by applying a plurality of styles to the summary content (620, 940), a plurality of pieces of summary content to which the plurality of styles is applied.

13. The operating method of one of claims 11 and 12, wherein the prompt (500) comprises explanatory text (510) providing an explanation of the predefined formats, example text (520, 850) providing an input example (521, 830) and an output example (523, 840) of the predefined formats, and input text (530) comprising at least a portion of the text content (330, 700, 910).

14. The operating method of one of claims 11 to 13, wherein the generating of the prompt (500) comprises dividing the text content (330, 700, 910) into one or more parts when the text content (330, 700, 910) exceeds a threshold size and sequentially generating a prompt (500) for each of the one or more divided parts.

15. A non-transitory computer-readable storage medium storing one or more computer programs comprising instructions for performing the operating method of any one of claims 11 to 14.
